(19) Europäisches Patentamt
European Patent Office
Office européen des brevets

(11) **EP 4 746 058 A1**

(12) **EUROPEAN PATENT APPLICATION**

(43) Date of publication:
**20.05.2026 Bulletin 2026/21**

(21) Application number: **25212376.5**

(22) Date of filing: **30.10.2025**

(51) International Patent Classification (IPC):
*H01M 4/13* (2010.01)          *H01M 10/04* (2006.01)
*H01M 50/107* (2021.01)       *H01M 50/531* (2021.01)

(52) Cooperative Patent Classification (CPC):
**H01M 4/13; H01M 10/0431; H01M 50/107;
H01M 50/531; H01M 2004/021**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.11.2024 KR 20240163545**

(71) Applicant: SAMSUNG SDI CO., LTD.
Yongin-si, Gyeonggi-do 17084 (KR)

(72) Inventors:
• **Min, Jungki**
  **17084 Yongin-si (KR)**
• **Hong, Daehyun**
  **17084 Yongin-si (KR)**
• **Ji, Hyeongmin**
  **17084 Yongin-si (KR)**
• **Jung, Injoe**
  **17084 Yongin-si (KR)**

(74) Representative: **Maiwald GmbH**
**Elisenhof**
**Elisenstraße 3**
**80335 München (DE)**

(54) **RECHARGEABLE BATTERY**

(57)     A rechargeable battery includes an electrode assembly including a positive electrode, a negative electrode, and a separator; and a case configured to accommodate and seal the electrode assembly and an electrolyte in an internal space. The negative electrode includes a negative substrate and a negative active material layer positioned on at least one surface of the negative substrate. A plurality of groove portions are positioned in the negative active material layer. On the cross-section of the negative active material layer, each central axis of the plurality of groove portions are inclined with respect to a normal line of the surface of the negative active material layer.

## FIG. 6

**Description**

**BACKGROUND OF THE DISCLOSURE**

**(a) Field of the Disclosure**

The present disclosure relates to a rechargeable battery. More particularly, the present disclosure relates to an electrode having surface irregularities.

**(b) Description of the Related Art**

Rechargeable batteries are used for a variety of purposes, including powering small electronic devices such as, e.g., mobile phones and laptop computers, and powering motors in, e.g., electric vehicles and hybrid vehicles. The rechargeable battery includes an electrode assembly and a case configured to accommodate and seal the electrode assembly and an electrolyte in an internal space. The electrode assembly includes two electrodes (positive and negative electrodes) and a separator.

In order to increase the output and the capacity of rechargeable batteries, increasing energy density and loading level of the electrodes may be advantageous. However, electrodes may unintentionally reduce impregnation of electrolytes. When electrolyte impregnation in the electrode decreases, precipitation may begin in the area where the electrolyte impregnation is insufficient.

**SUMMARY OF THE DISCLOSURE**

The present disclosure includes a rechargeable battery that can improve lifespan characteristics by increasing the energy density and loading level of the electrode, and simultaneously or contemporaneously improving the impregnability of the electrolyte.

A rechargeable battery according to an example embodiment includes an electrode assembly including a positive electrode, a negative electrode, and a separator; and a case configured to accommodate and seal the electrode assembly and an electrolyte in an internal space thereof. The negative electrode includes a negative substrate, and a negative active material layer positioned on at least one surface of the negative substrate. A plurality of groove portions are positioned in the negative active material layer. On a cross-section of the negative active material layer, each central axis of the plurality of groove portions are inclined with respect to a normal line of the surface of the negative active material layer.

Each of, or one or more or, the plurality of groove portions may include an outer end parallel to the surface of the negative active material layer, and an inner end positioned closer to the negative substrate than the outer end. The central axis may be an imaginary or virtual line connecting a center of the outer end and a center of the inner end. The center of the inner end may be positioned to be misaligned from the center of the outer end along a direction in which the electrolyte flows when the electrolyte is injected.

The negative active material layer may have a substantially constant thickness. The normal line of the surface of the negative active material layer may coincide with a thickness direction of the negative electrode. In each of, or one or more of, the plurality of groove portions, the center of the inner end may be positioned lower than the center of the outer end along a gravity direction.

The plurality of groove portions may have a substantially constant depth. On the other hand, the plurality of groove portions may have different depths depending on the position thereof. The plurality of groove portions may have different depths depending on the position thereof along a width direction of the negative electrode. The negative electrode may include two edges facing each other along the width direction. The plurality of groove portions may have a greater depth the farther away they are from the two edges.

The plurality of groove portions may be provided in a dot pattern and satisfy at least one of conditions (1), (2), and (3) below:

$$(1)\ 30\ \mu m\ \leq\ a\ diameter\ of\ a\ groove\ portion\ \leq\ 70\ \mu m;$$

$0.3 \leq$ a depth of a groove portion / a thickness of a negative active material layer $\leq 0.8$;

and

$$(3)\ 30°\ \leq\ a\ slope\ of\ a\ center\ axis\ for\ a\ normal\ \leq\ 70°\ .$$

The plurality of groove portion may be a plurality of first groove portions. The positive electrode may include a positive substrate and a positive active material layer positioned on at least one surface of the positive substrate. A plurality of second groove portions having the same configuration as the plurality of first groove portions may be positioned in the positive active material layer.

A rechargeable battery according to another example embodiment includes an electrode assembly including a positive electrode, a negative electrode, and a separator; a can including the electrode assembly and an electrolyte in an internal space thereof; and a cap plate coupled to the can and configured to seal the can and having an electrolyte injection opening. The negative electrode includes a negative substrate and a negative active material layer positioned on at least one surface of the negative substrate. A plurality of groove portions that store the electrolyte are positioned in the negative active material layer. Each of, or one or more of, the plurality of groove portions includes an outer end parallel to the surface of the negative active material layer and an inner end positioned closer to the negative substrate than the outer end. A center of the inner end is misaligned from a center of the outer end along a direction in which the electrolyte flows when the electrolyte is injected.

In each of, or one or more of, the plurality of groove portions, the center of the inner end may be positioned lower than the center of the outer end along a gravity direction. The plurality of groove portions may have a substantially constant depth. On the other hand, the plurality of groove portions may have different depths depending on the position thereof along a width direction of the negative electrode. The negative electrode may include two edges facing each other along the width direction. The plurality of groove portions may have a greater depth farther from the two edges.

The plurality of groove portions may be provided in a dot pattern and satisfy at least one of conditions (1), (2), and (3) below:

$$(1)\ 30\ \mu m\ \leq\ a\ diameter\ of\ a\ groove\ portion\ \leq\ 70\ \mu m;$$

$$0.3 \leq a\ depth\ of\ a\ groove\ portion\ /\ a\ thickness\ of\ a\ negative\ active\ material\ layer \leq 0.8; \tag{2}$$

and

$$(3)\ 30 \leq a\ slope\ of\ a\ central\ axis\ relative\ to\ a\ normal\ line \leq 70^{\circ}.$$

The plurality of groove portions may be a plurality of first groove portions. The positive electrode may include a positive substrate and a positive active material layer positioned on at least one surface of the positive substrate. A plurality of second groove portions that store the electrolyte may be positioned in the positive active material layer.

Each of, or one or more of, the plurality of second groove portions may include an outer end parallel to the surface of the positive active material layer and an inner end positioned closer to the positive substrate than the outer end. A center of the inner end may be misaligned from a center of the outer end along a direction in which the electrolyte flows when the electrolyte is injected.

The plurality of second groove portions may have a substantially constant depth. On the other hand, the plurality of second groove portions may have different depths depending on the position thereof along the width direction of the positive electrode. The positive electrode may include two edges facing each other along the width direction. The plurality of second groove portions may have a greater depth farther from the two edges.

According to the example embodiments, the electrode assembly may increase the electrolyte impregnability of the electrodes and increase the electrolyte retention capacity by using the plurality of groove portions. According to the example embodiments, the rechargeable battery may reduce or suppress the formation of precipitates due to the electrolyte impregnation and improve the operating stability and long-term lifespan characteristics.

## BRIEF DESCRIPTION OF THE DRAWINGS

FIG. 1 is a perspective view of a rechargeable battery according to a first example embodiment.
FIG. 2 is a cross-sectional view of the rechargeable battery shown in FIG. 1.
FIG. 3 is a perspective view of an electrode assembly of a rechargeable battery according to a first example embodiment.
FIG. 4 is an exploded perspective view showing an unfolded state of the electrode assembly illustrated in FIG. 3.
FIG. 5 is a partially enlarged cross-sectional view of the electrode assembly shown in FIG. 3.
FIG. 6 is a partially enlarged view of FIG. 5, showing a negative electrode.
FIG. 7 is a partially enlarged view of FIG. 6.

FIG. 8 is a front view of a negative active material layer shown in FIG. 6.

FIG. 9 is a partially enlarged cross-sectional view of an electrode assembly of a rechargeable battery according to a second example embodiment.

FIG. 10 is a partially enlarged cross-sectional view of a negative electrode of a rechargeable battery according to a third example embodiment.

FIG. 11 is a partially enlarged cross-sectional view of an electrode assembly of a rechargeable battery according to a fourth example embodiment.

FIG. 12 is a perspective view of a rechargeable battery according to a fifth example embodiment.

FIG. 13 is a cross-sectional view of the rechargeable battery illustrated in FIG. 12.

FIG. 14 is a perspective view of an electrode assembly of a rechargeable battery according to a fifth example embodiment.

FIG. 15 is a graph showing results of an electrolyte impregnation experiment for a negative electrode of an example embodiment and a negative electrode of Comparative Examples 1 and 2.

## DETAILED DESCRIPTION OF THE EMBODIMENTS

The present disclosure is described more fully hereinafter with reference to the accompanying drawings, in which example embodiments of the disclosure are shown. As those skilled in the art would realize, the described example embodiments may be modified in various different ways, all without departing from the scope of the present disclosure.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

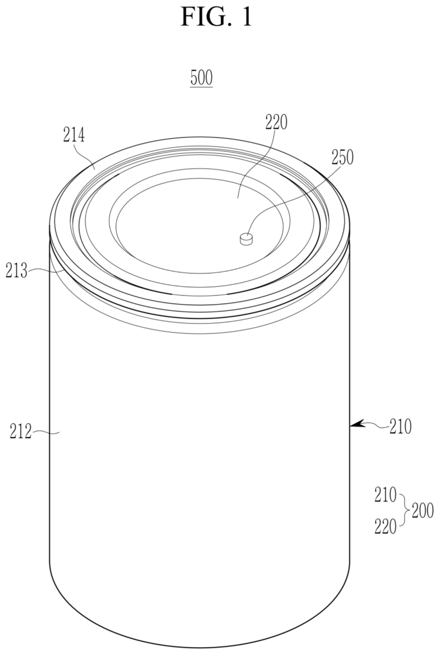

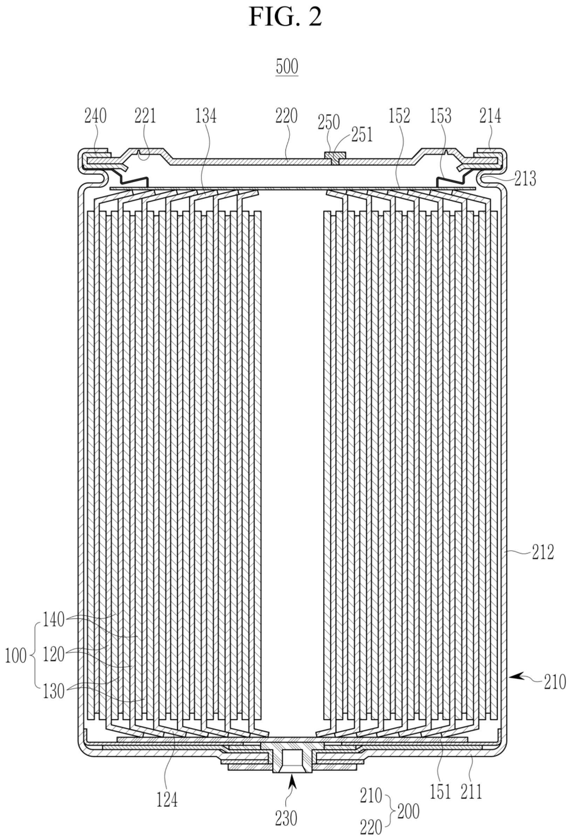

FIG. 1 is a perspective view of a rechargeable battery according to a first example embodiment. FIG. 2 is a cross-sectional view of the rechargeable battery shown in FIG. 1.

Referring to FIG. 1 and FIG. 2, a rechargeable battery 500 of the present example embodiment may include an electrode assembly 100 and a case 200 configured to accommodate and seal the electrode assembly 100 and an electrolyte in an internal space thereof. The case 200 may be approximately cylindrical, and the rechargeable battery 500 of the present example embodiment may be a cylindrical rechargeable battery.

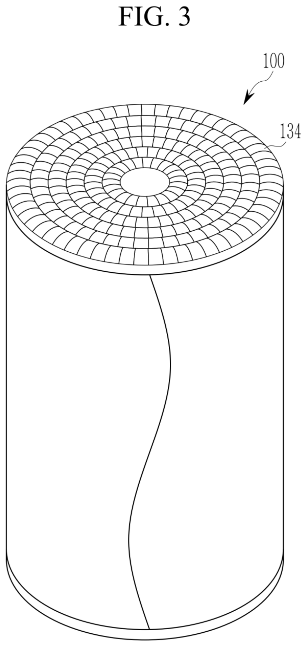

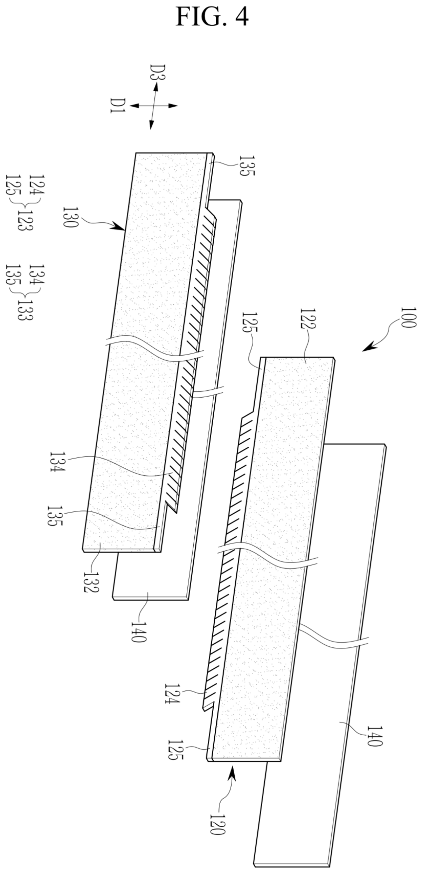

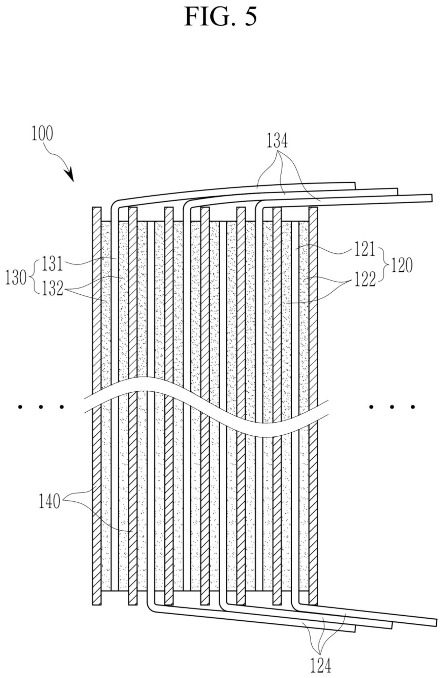

FIG. 3 is a perspective view of an electrode assembly of a rechargeable battery according to a first example embodiment. FIG. 4 is an exploded perspective view showing an unfolded state of the electrode assembly shown in FIG. 3. FIG. 5 is a partially enlarged cross-sectional view of the electrode assembly shown in FIG. 3.

Referring to FIG. 3 to FIG. 5, the electrode assembly 100 may be configured such that a stack including two electrodes 120, 130, and two separators 140 is wound multiple times around a center pin (not shown). The two electrodes 120 and 130 may include a positive electrode 120 and a negative electrode 130. The positive electrode 120, the negative electrode 130, and the separators 140 may each be manufactured in a long strip shape, and the stack may be wound in a jelly-roll shape.

The stack may have a configuration in which the negative electrode 130, the separator 140, the positive electrode 120, and the separator 140 are stacked in order from the inside facing the center pin, but is not limited to this example. The center pin may remain in the center of the electrode assembly 100, or may be separated from the electrode assembly 100 after winding the stack.

The positive electrode 120 may include a positive substrate 121 and a positive active material layer 122 positioned on at least one surface of the positive substrate 121. The positive active material layer 122 may be positioned on both surfaces of the positive substrate 121. The negative electrode 130 may include a negative substrate 131 and a negative active material layer 132 positioned on at least one surface of the negative substrate 131. The negative active material layer 132 may be positioned on both surfaces of the negative substrate 131. The separator 140 is positioned between the positive electrode 120 and the negative electrode 130 to physically separate the positive electrode 120 from the negative electrode 130.

The positive substrate 121 may be composed of or include a metal thin plate with desired or improved electrical conductivity, such as an aluminum foil or an aluminum mesh. The positive active material layer 122 may include a positive active material, and may further include a binder and/or a conductive material. The positive substrate 121 constitutes a path for charges generated from the positive active material layer , and supports the positive active material layer 122. The positive substrate 121 may be referred to herein as a positive current collector.

The positive active material may include a lithium transition metal composite oxide. The lithium transition metal composite oxide may include at least one of, for example, lithium-nickel oxide, lithium-cobalt oxide, lithium-manganese oxide, a lithium-phosphoric acid iron compound, and cobalt-free lithium nickel-manganese oxide.

The negative substrate 131 may be composed of or include a metal thin plate having desired or improved electrical conductivity, such as, e.g., at least one of a copper foil, a copper mesh, a nickel foil, or a nickel mesh. The negative active material layer 132 may include a negative active material, and may further include a binder and/or conductive material. The negative substrate 131 constitutes a path for charge generated from the negative active material layer 132, and supports the negative active material layer 132. The negative substrate 131 may be referred to as a negative current collector.

The negative active material may include at least one of a carbon-based active material and a silicon-based active material. The carbon-based active material may include at least one of natural graphite and artificial graphite. The silicon-based active material may include at least one of silicon-carbon composite active material, silicon oxide (SiOx, $0<x\leq2$), and silicon carbide (SiC).

In each of, or one or more of, the positive active material layer 122 and the negative active material layer 132, the binder may include at least one of an aqueous binder, a non-aqueous binder, and a dry binder. In each of, or one or more of, the positive active material layer 122 and the negative active material layer 132, the conductive material may include at least one of a carbon-based material such as natural graphite, artificial graphite, carbon black, carbon fiber, carbon nanofiber, and carbon nanotube; a metallic material in a form of a metal powder or a metal fiber including at least one of copper, nickel, aluminum, silver, and the like,; and a conductive polymer such as a polyphenylene derivative.

The separator 140 may be composed of or include a porous substrate, or may be composed of or include a porous substrate having a coating layer positioned on at least one surface. The porous substrate may include one or more of polyethylene, polypropylene, polyethylene terephthalate, polypropylene terephthalate, polybutylene terephthalate, polyester, polycarbonate, and polyimide. The coating layer may include a binder, and the binder may include a polyvinylidene fluoride compound.

In the positive electrode 120, the positive active material layer 122 may be positioned on any portion of the positive substrate 121 except for one edge (e.g., the lower edge). The portion of the positive substrate 121 that is not covered by the positive active material layer 122 and which surface is exposed may be referred to as the positive uncoated region 123. The positive uncoated region 123 may include a central uncoated region 124 and a pair of edge uncoated regions 125 positioned on both sides of the central uncoated region 124.

In the negative electrode 130, the negative active material layer 132 may be positioned on any portion of the negative substrate 131 except the other side (e.g., the upper side) edge. The portion of the negative substrate 131 that is not covered by the negative active material layer 132 and which surface is exposed may be referred to as a negative uncoated region 133. The negative uncoated region 133 may include a central uncoated region 134 and a pair of edge uncoated regions 135 positioned on both sides of the central uncoated region 134.

The heights of the central uncoated regions 124 and 134, which are measured along a width direction of the positive electrode 120 and the negative electrode 130 (direction D1 in FIG. 4), may be greater than each of, or one or more of, the heights of the pair of edge uncoated regions 125 and 135. The central uncoated regions 125 and 135 may be folded inward toward the winding center of the electrode assembly 100. A plurality of incision lines are positioned in the central uncoated regions 124 and 134 to facilitate the folding of the central uncoated regions 124 and 134.

Referring back to FIG. 1 to FIG. 5, a positive current collecting plate 151 may be fixed to the folded central uncoated region 124 of the positive electrode 120-for example, by welding. A negative current collecting plate 152 may be fixed to the folded central uncoated region 134 of the negative electrode 130-for example, by welding. The central uncoated regions 124 and 134, which are folded inward and overlap each other, may increase the current collecting efficiency of the positive electrode 120 and the negative electrode 130.

The case 200 may include a can 210 having a concave internal space and one opened side, and a cap plate 220 coupled to the can 210 and configured to seal the can 210. The can 210 and the cap plate 220 may be manufactured of or include a high-strength metal such as stainless steel. The can 210 may include a bottom portion 211 and a side portion 212 connected to an edge of the bottom portion 211. When the top and bottom portions of the rechargeable battery 500 are reversed, the bottom portion 211 may be referred to as a top portion.

The side portion 212 may include a beading portion 213 and a crimping portion 214. The beading portion 213 may be a portion that is concavely deformed toward the inside of the can 210. The crimping portion 214 may be a portion in which the end of the side portion 212 is bent toward the inside of the can 210. The electrode assembly 100, the positive current collecting plate 151, and the negative current collecting plate 152 may be accommodated in the space between the bottom portion 211 and the beading portion 213, and shaking inside the can 210 may be reduced or suppressed by the beading portion 213.

A terminal hole may be positioned in the center of the bottom portion 211, and the terminal portion 230 may be installed in the terminal hole via an insulator. The terminal portion 230 may be connected to the positive current collecting plate 151 and may constitute a positive terminal by being connected to the positive electrode 120. The negative current collecting plate 152 may include a plurality of connectors 153. The plurality of connectors 153 may be secured to the interior surface of the beading portion 213. The can 210 may be connected to the negative electrode 130 and constitute a negative terminal.

The cap plate 220 may be positioned on the outside of the negative current collecting plate 152, and may be fixed between the beading portion 213 and the crimping portion 214 via an insulating gasket 240 and configured to seal the can 210. The cap plate 220 may be electrically non-polar. A notch 221 may be positioned on one side of the cap plate 220 to relieve internal pressure by being broken at a predetermined pressure. An injection hole 251 for an electrolyte injection may be positioned in the cap plate 220. The injection hole 251 may be sealed by a plug 250 after an electrolyte injection.

The electrolyte is a medium configured to enable the movement of lithium ions between the positive electrode 120 and the negative electrode 130, and may include a lithium salt, an organic solvent, and additives. The separators 140 retain electrolytes due to a porous structure thereof and may allow lithium ions to pass through.

During the charging process of the rechargeable battery 500, lithium ions are deintercalated from the positive active material layer 122 and inserted (intercalated) into the negative active material layer 132. During the discharging process of the rechargeable battery 500, lithium ions are deintercalated from the negative active material layer 132 and inserted into the positive active material layer 122. The electrode assembly 100 may perform the stable charging and discharging functions when the positive electrode 120, the negative electrode 130, and the separators 140 are sufficiently immersed in the electrolyte.

The negative active material layer 132 may use or include a material with high energy density, and may have a thickness in a range of approximately 70 $\mu$m or more and a loading level in a range of approximately 10 mg/cm$^2$ or more. The loading level represents weight per unit area.

In general, the energy density of the silicon-based active material layer is approximately 10 times higher than the energy density of the carbon-based active material, but the silicon-based active material exhibits large volume changes during the charging and discharging processes. The negative active material layer 132 may include, for example, the silicon-based active material and the carbon-based active material in an appropriate or desired ratio to increase the energy density while reducing the volume change.

The negative active material layer 132 may increase the output and capacity of the rechargeable battery 500 by securing the aforementioned thickness and loading level. Additionally, the negative active material layer 132 may have surface irregularities to increase the impregnation of electrolytes.

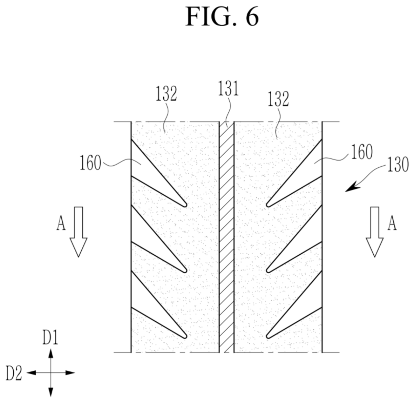

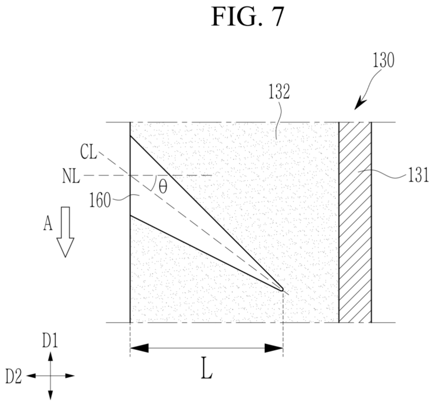

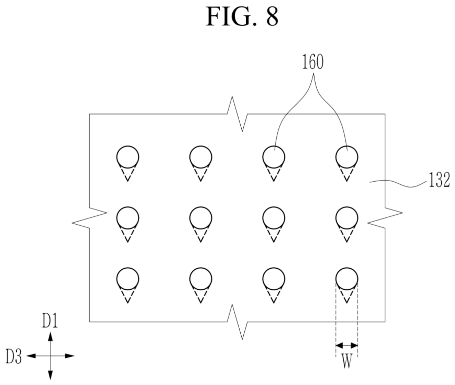

FIG. 6 is a partial enlargement of FIG. 5, showing a negative electrode. FIG. 7 is a partial enlarged view of FIG. 6. FIG. 8 is a front view of the negative active material layer shown in FIG. 6.

Referring to FIG. 6 to FIG. 8, the negative active material layer 132 may include a plurality of groove portions 160. The plurality of groove portions 160 may be substantially evenly positioned throughout the negative active material layer 132. The plurality of groove portions 160 expand the surface area of the negative active material layer 132, provide the path for the electrolyte to be impregnated into the negative active material layer 132, and simultaneously or contemporaneously increase the speed at which the electrolyte permeates.

In general, as the thickness of the negative active material layer, the filling density, and the loading level increase, the impregnability of the electrolyte deteriorates. In the rechargeable battery 500 of the present example embodiment, the negative active material layer 132 may improve the impregnability of the electrolyte due to the surface irregularities by the plurality of groove portions 160, and may perform more stable charging and discharging functions.

Each of, or one or more of, the plurality of groove portions 160 may be configured to penetrate the negative active material layer 132 to a predetermined or desired thickness from the surface of the negative active material layer 132 toward the negative substrate 131. In the cross-section of the negative active material layer 132, each central axis CL, or one or more of the central axis CL, of the plurality of groove portions 160 may have a slope with respect to the normal line NL of the surface of the negative active material layer 132. Here, the normal line NL is a line perpendicular to the surface of the negative active material layer 132 on the cross-section of the negative electrode 130.

The negative active material layer 132 may have a substantially constant thickness, and the normal line NL of the surface of the negative active material layer 132 may be aligned with a thickness direction (direction D2) of the negative electrode 130. A depth L of each of, or one or more of, the plurality of groove portions 160 may be smaller than the thickness of the negative active material layer 132. Each of, or one or more of, the plurality of groove portions 160 may have a width that becomes smaller as the width approaches the negative substrate 131, but is not limited thereto.

Taking one groove portion 160 as a reference, the portion parallel to the surface of the negative active material layer 132 may be referred to as an "outer end" of the groove portion 160, and the portion positioned closest to the negative substrate 131 may be referred to as an "inner end" of the groove portion 160. The central axis CL of the groove portion 160 may be defined as an imaginary or virtual line connecting the center of the outer end and the center of the inner end on the cross-section of the negative active material layer 132.

The central axis CL of the groove portion 160 is not parallel to the normal line NL of the surface of the negative active material layer 132, and may have a slope with respect to the normal line NL. For example, the center of the inner end of the groove portion 160 may be misaligned from the center of the outer end of the groove portion 160 along a direction (direction A) in which the electrolyte flows when the electrolyte is injected (the liquid flow direction). The liquid flow direction (direction A) may coincide with a gravity direction.

Referring to FIG. 6 and FIG. 7, the center of the inner end of the groove portion 160 may be positioned lower than the center of the outer end of the groove portion 160. Assuming that the normal line NL of the surface of the negative active material layer 132 passes through the center of the outer end of the groove portion 160 as in FIG. 7, the central axis CL of the groove portion 160 may have a slope $\theta$ from the virtual normal line NL. Accordingly, the plurality of groove portions 160 may have a shape that is inclined in a substantially diagonal direction.

Referring to FIG. 1 to FIG. 8, the electrolyte is supplied through an injection hole 251 of the cap plate 220, and may move along the gravity direction inside the can 210. The electrolyte may fill pores of the separators 140 while flowing in the gravity direction, and may fill the plurality of groove portions 160 provided in the negative electrode 130. The electrolyte may wet the entire electrode assembly 100 and fill the internal space of the can 210.

The groove portion 160 of the above-described configuration may constitute an electrolyte reservoir that holds the electrolyte due to the slope of the central axis CL. Assuming the plurality of groove portions which central axis is parallel to the thickness direction of the negative electrode, during the electrolyte injection process, the electrolytes may permeate into the plurality of groove portions, but the effect of accumulating the electrolytes, like the groove portion of the present example embodiment, is small.

The plurality of groove portions 160 that constitute electrolyte reservoirs may be configured to increase the electrolyte reserve of the rechargeable battery 500, and to increase the time that the negative electrode 130 retains the electrolyte during use after the manufacture of the rechargeable battery 500.

Therefore, the negative electrode 130 may maintain the state of electrolyte retention for a substantial amount of time by the plurality of groove portions 160, and may substantially uniformly retain the electrolyte throughout the entire negative electrode 130. The rechargeable battery 500 of the present example embodiment may effectively reduce or suppress the formation of precipitates by increasing the electrolyte impregnation of the negative electrode 130, and improve the operation stability and long-term lifespan characteristics thereof.

During the electrolyte injection process, the electrolytes filled in the plurality of groove portions 160 may reliably permeate the negative active material layer 132 and maintain the retention state through the formation process and aging process after the electrolyte injection process. Therefore, even when the top and bottom of the rechargeable battery 500 are reversed during the use of the rechargeable battery 500, the effect of improving the electrolyte impregnation of the negative electrode 130 may be maintained.

The plurality of groove portions 160 may be formed in a dot pattern, and may be positioned apart from each other on the surface of the negative active material layer 132. For example, the plurality of groove portions 160 may be composed of or include circular dots, which may be aligned side by side at an equal distance along the width direction (direction D1) and the length direction (direction D3) of the negative electrode 130.

FIG. 8 illustrates the case where the plurality of groove portions 160 are arranged in a circular dot patterns, but is not limited thereto. The plurality of groove portions 160 may be formed in various shapes, such as, e.g., polygonal, oval, cross, or bar-shaped dots in addition to circular dots. The plurality of groove portions 160 may be made by various methods such as, e.g., needle punching or laser processing.

In the case of needle punching, the needle may enter the negative active material layer 132 with a predetermined or desired slope from the thickness direction of the negative electrode 130, and exit the negative active material layer 132 in a direction opposite to the entry direction. In the case of laser processing, the laser beam may be irradiated to the negative active material layer 132 with a predetermined or desired slope from the thickness direction of the negative electrode 130. At this time, overlap processing may be performed multiple times by changing the angle of the laser beam.

The diameter (a maximum width measured at the surface of the negative active material layer 132) (W in FIG. 8) of each of, or one or more of, the plurality of groove portions 160 may be in a range of approximately 30 $\mu$m to 70 $\mu$m, and the depth (L in FIG. 7) of each of, or one or more of, the plurality of groove portions 160 may be in a range of approximately 0.3 to 0.8 times the thickness of the negative active material layer 132. Here, the diameter W of the groove portion 160 is the diameter of the outer end, and the depth L of the groove portion 160 is the depth measured along the thickness direction (direction D2) of the negative electrode 130.

When the diameter W of the groove portion 160 is less than about 30 $\mu$m or the depth L of the groove portion 160 is less than about 0.3 times the thickness of the negative active material layer 132, the expansion effect of the surface area due to the plurality of groove portions 160 may be small, and the amount of the electrolyte accumulated in the groove portions 160 may be small, so the effect of improving the electrolyte impregnation may be low. When the diameter W of the groove portion 160 exceeds about 70 $\mu$m, or the depth L of the groove portion 160 exceeds about 0.8 times the thickness of the negative active material layer 132, the active material may be substantially removed, causing deterioration of the loading level of the negative active material layer 132.

The central axis CL of the groove portion 160 may have the slope ($\theta$) in a range of approximately 30° to 70° with respect to the normal line NL of the surface of the negative active material layer 132. When the slope of the central axis CN is less than about 30°, the electrolyte retention effect due to the groove portion 160 may be difficult to maintain for a long time. For example, the electrolytes accommodated in the plurality of groove portions 160 may be readily separated from the groove portions 160 by external environments such as shaking of the rechargeable battery 500. When the slope ($\theta$) of the central axis CL exceeds about 70°, machining of the groove portion 160 may be difficult, and damage to the negative active material layer 132 may occur during machining of the groove portions 160.

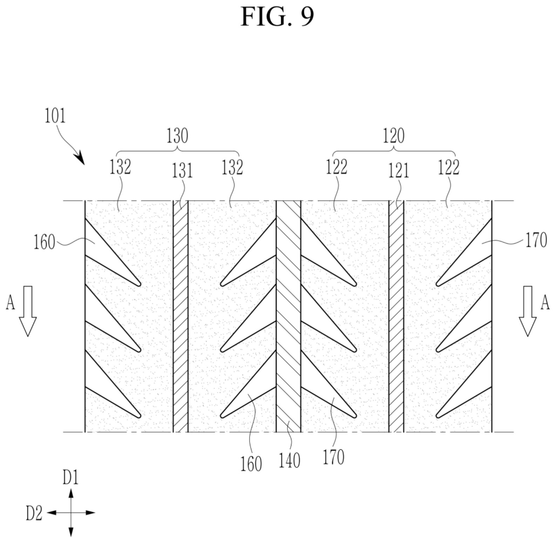

FIG. 9 is a partially enlarged cross-sectional view of an electrode assembly of a rechargeable battery according to the second example embodiment.

Referring to FIG. 9, the rechargeable battery of the second example embodiment has the same or a similar configuration as the first example embodiment described above, except that a plurality of groove portions 170 are positioned in the positive active material layer 122.

The plurality of groove portions 170 positioned in the positive active material layer 122 may have the same configuration (the shape, the diameter, the depth, the slope, and the like) as the plurality of groove portions 160 positioned in the negative active material layer 132. The rechargeable battery of the present example embodiment may further increase electrolyte retention capacity by providing the plurality of groove portions 160 and 170 on both the positive electrode 120 and the negative electrode 130, and may perform more stable charging and discharging functions by improving the electrolyte impregnability of the positive electrode 120.

In FIG. 9, a reference numeral 101 represents the electrode assembly. The plurality of groove portions 160 positioned at the negative electrode 130 may be referred to as the first groove portions, and the plurality of groove portions 170 positioned at the positive electrode 120 may be referred to as the second groove portions.

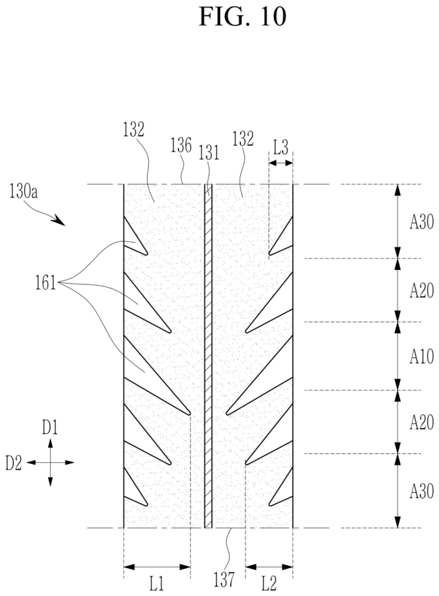

FIG. 10 is a partially enlarged cross-sectional view of a negative electrode of a rechargeable battery according to the third example embodiment.

Referring to FIG. 10, the rechargeable battery of the present example embodiment has the same or a similar configuration as the first example embodiment described above, with a difference that a plurality of groove portions 161 have different depths depending on the position thereof.

The negative electrode 130a may include two edges 136 and 137 facing each other along the width direction (direction D1). The plurality of groove portions 161 may have different depths depending on the position thereof along the width direction (direction D1) of the negative electrode 130a. For example, each of, or one or more of, the plurality of groove portions 161 may have a greater depth as the groove portions move away from the two edges 136 and 137 of the negative electrode along the width direction (direction D1) (closer to the center of the negative electrode 130a).

For example, the negative electrode 130a may be divided into a central region A10, two peripheral regions A20, and two edge regions A30 along the width direction (direction D1). The groove portions 161 positioned in the central region A10 of the negative electrode 130a may have a depth L1, and the groove portions 161 positioned in the peripheral region A20 may have a depth L2. Also, the groove portions 161 positioned at the edge region A30 may have a depth L3. The depth of the groove portions 161 may satisfy a condition of L1 > L2 > L3.

The plurality of groove portions 161 positioned in each region may have the same depth, and the plurality of groove portions 161 in the entire negative active material layer 132 may have the same diameter and the same central axis slope, but this example embodiment is not limited thereto.

In general, as the electrode assembly becomes longer (the width of the negative electrode increases) and the thickness and loading level of the negative active material layer increase, electrolyte impregnation in the central region may deteriorate. In the rechargeable battery of the present example embodiment, by increasing the depth of the groove portions 161 in the central region A10 of the negative electrode 130a, the surface area of the negative active material layer 132 may be increased so that electrolyte impregnability of the central region A10 may be increased, thereby accumulating a larger amount of the electrolyte in the central region A10, and then effectively reducing or suppressing the occurrence of precipitation in the central region A10.

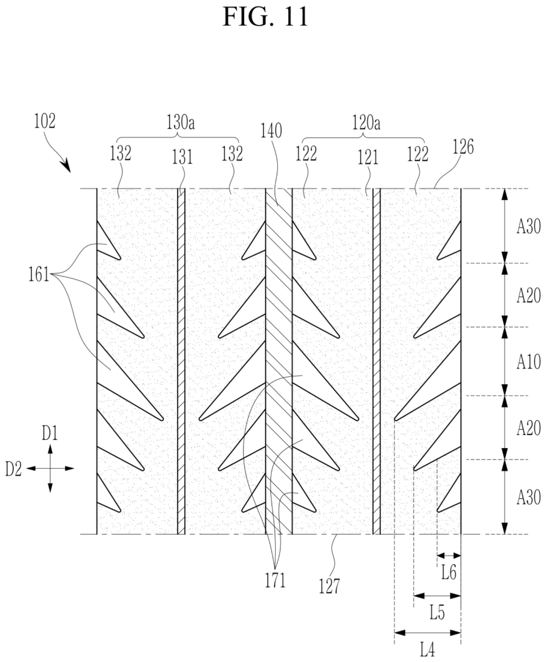

FIG. 11 is a partially enlarged cross-sectional view of an electrode assembly of a rechargeable battery according to the fourth example embodiment.

Referring to FIG. 11, the rechargeable battery of the present example embodiment has the same or a similar configuration as the third example embodiment described above, with a difference that a plurality of groove portions 171 are positioned in the positive active material layer 122.

The positive electrode 120a may include two edges 126 and 127 facing each other along the width direction (direction D1). The plurality of groove portions 171 may have different depths depending on the positions thereof along the width direction (direction D1) of the positive electrode 120a. For example, each of, or one or more of, the plurality of groove portions 171 may have a greater depth as the groove portions move away from the two edges 126 and 127 of the positive electrode 120a (closer to the center of the positive electrode 120a) along the width direction (direction D1).

For example, the positive electrode 120a may be divided into the central region A10, two peripheral regions A20, and two edge regions A30 along the width direction (direction D1). The groove portion 171 positioned in the central region A10 of the positive electrode 120a may have a depth L4, and the groove portion 171 positioned in the peripheral region A20 may have a depth L5. Also, the groove portion 171 positioned at the edge region A30 may have a depth L6. The depth of the groove portion 171 may satisfy the condition L4 > L5 > L6.

The plurality of groove portions 171 positioned in each region may have the same depth, and the plurality of groove portions 171 in the entire positive active material layer 122 may have the same diameter and the same central axis slope, but the example embodiments are not limited to thereto.

In the rechargeable battery of the present example embodiment, by increasing the depth of the groove portions 171 and 161 in the central region A10 of each of, or one or more of, the positive electrode 120a and the negative electrode 130a, electrolyte impregnability of the central region A10 may be increased and a larger amount of the electrolyte may be accumulated in the central region A10, thereby effectively reducing or suppressing the occurrence of precipitation in the central region A10.

In FIG. 11, a reference numeral 102 represents the electrode assembly. The plurality of groove portions 161 positioned at the negative electrode 130a may be referred to as the first groove portion, and the plurality of groove portion 171 positioned at the positive electrode 120a may be referred to as the second groove portion.

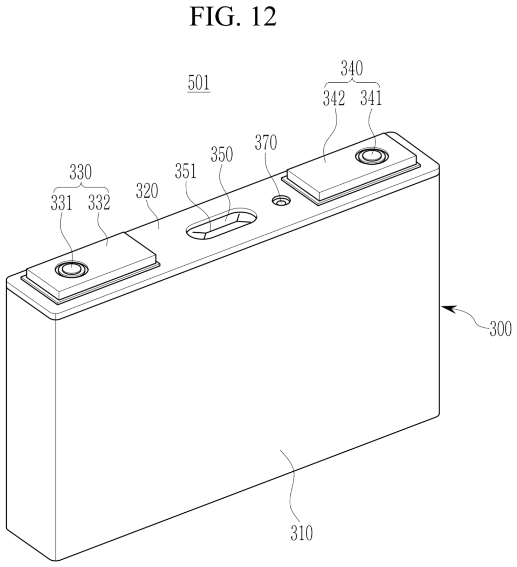

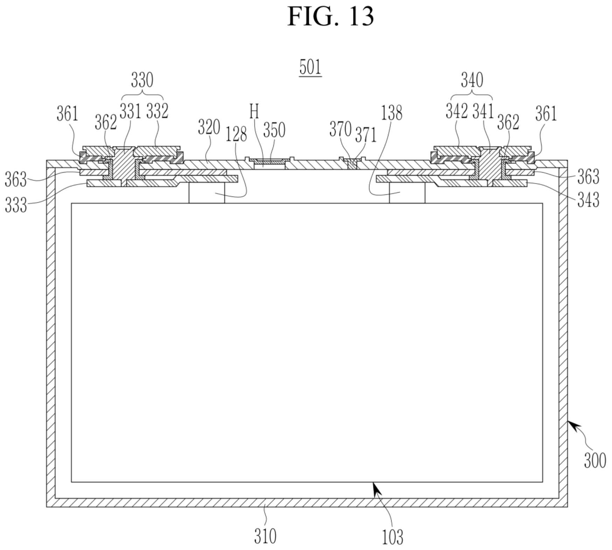

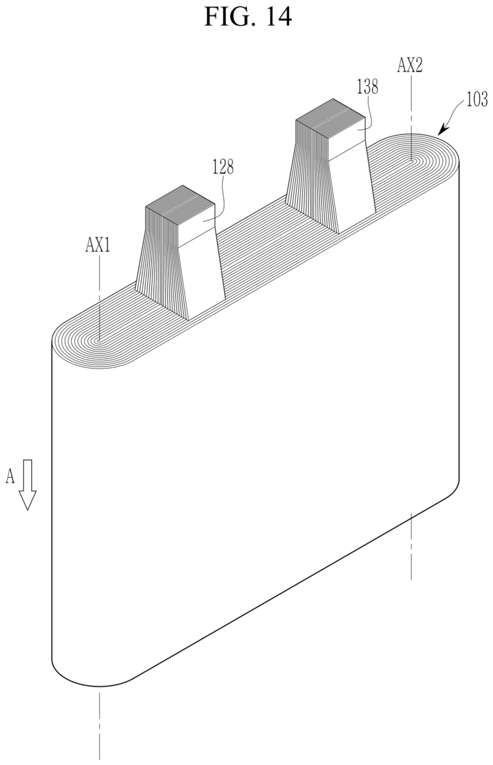

FIG. 12 is a perspective view of a rechargeable battery according to the fifth example embodiment. FIG. 13 is a cross-sectional view of the rechargeable battery illustrated in FIG. 12. FIG. 14 is a perspective view of an electrode assembly of a rechargeable battery according to the fifth example embodiment.

Referring to FIG. 12 to FIG. 14, the rechargeable battery 501 of the present example embodiment may be a square rechargeable battery. The electrode assembly 103 may be wound around two winding axes AX1 and AX2, and may have a shape of a flat jelly roll. The electrode assembly 103 may include at least one positive tab 128 and at least one negative tab 138 protruding outwardly.

A case 300 may be a roughly rectangular parallelepiped shape. The case 300 may include a can 310 having a concave internal space and one open end, and a cap plate 320 coupled to the can 310 and configured to seal the can 310. The cap plate 320 may be installed with a positive terminal 330, a negative terminal 340, and a safety vent 350.

The positive terminal 330 may include a first pillar 331 and a first terminal plate 332, and the positive tab 128 may be fixed to a first connection 333 connected to the first pillar 331. The negative terminal 340 may include a second pillar 341 and a second terminal plate 342, and the negative tab 138 may be fixed to a second connection 343 connected to the second pillar 341. The positive terminal 330 and the negative terminal 340 may each be insulated from the cap plate 320 by an upper insulator 361, a seal gasket 362, and a lower insulator 363.

A vent hole H may be positioned in the cap plate 320, and the safety vent 350 may be installed in the vent hole H. The safety vent 350 may be a metal plate having a thickness that is smaller than the thickness of the cap plate 320 and may include a notch 351 that ruptures at a predetermined or desired pressure to relieve internal pressure. An injection hole 371 for an electrolyte injection may be positioned in the cap plate 320, and a plug 370 may seal the injection hole 371.

During the electrolyte injection process, an injection direction (direction A) may coincide with a gravity direction. The electrode assembly 103 has the same or a similar configuration as the electrode assembly of any one example embodiment among the first example embodiment to the fourth example embodiment, with a difference with respect to the aforementioned external shape and the configuration of the positive tab 128 and the negative tab 138.

While it has been stated above that the electrode assemblies 100, 101, 102, and 103 are of the winding type, the electrode assembly may be configured with the plurality of positive electrodes and the plurality of negative electrodes alternately stacked one by one with the separator therebetween. That is, the electrode assembly may be configured in a stacked type configuration. In addition, it has been stated above that the cases 200 and 300 are configured as the combination of the cans 210 and 310 and the cap plates 220 and 320, but the case may also be configured in a pouch form.

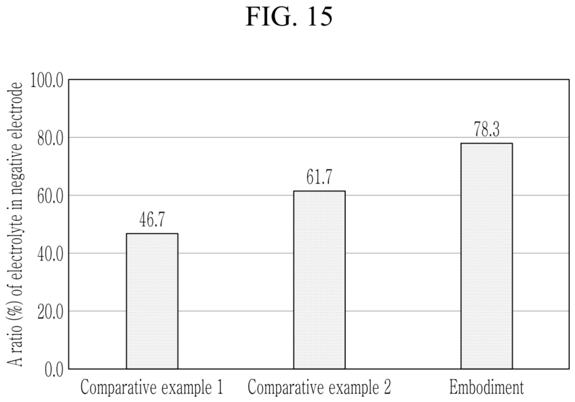

FIG. 15 is a graph showing results of an electrolyte impregnation experiment for a negative electrode of an example embodiment, and a negative electrode of Comparative Examples 1 and 2. In FIG. 15, a vertical axis represents a ratio (%) of the electrolyte in the negative electrode.

The negative electrode in Comparative Example 1 does not include a groove portion. The negative electrode of Comparative Example 2 includes a plurality of groove portions which central axes are parallel to the thickness direction of the negative electrode. The negative electrode of the embodiment includes a plurality of groove portions (see FIG. 6) which central axes are inclined in an inclined or diagonal direction. In the negative electrode of Comparative Example 2 and the negative electrode of the embodiment, the plurality of groove portions have the same diameter, the same depth, and the same spacing, with a difference with respect to the slope of the central axis.

The experiment proceeds by measuring an initial weight (a first weight) of the negative electrode, immersing the negative electrode in a tank including an electrolyte for a certain period of time, then removing the negative electrode from the tank, and measuring a weight (a second weight) of the negative electrode. The weight ratio of the electrolytes within the negative electrodes may be calculated using the difference between the first weight and the second weight.

Referring to FIG. 15, the ratio of the electrolytes in the negative electrodes is highest in the negative electrode of the example embodiment, and lowest in the negative electrode of Comparative Example 1, which has no groove portion. From the result of FIG. 15, it may be confirmed that the plurality of groove portions (the groove portions of the example embodiment) inclined in the substantially diagonal direction include a larger amount of the electrolyte than the groove portion of Comparative Example 1.

**Claims**

1. A rechargeable battery (500) comprising:

    an electrode assembly (100) including a positive electrode (120), a negative electrode (130), and a separator (140); and

a case (200, 300) configured to accommodate and seal the electrode assembly (100) and an electrolyte in an internal space thereof,

wherein the negative electrode (130) includes a negative substrate (131) and a negative active material layer (132) on at least one surface of the negative substrate (131),

a plurality of groove portions (160) are in the negative active material layer (132), and

on the cross-section of the negative active material layer (132), each central axis of the plurality of groove portions (160) are inclined with respect to a normal line of the surface of the negative active material layer (132).

2. The rechargeable battery (500) of claim 1, wherein:

one or more of the plurality of groove portions (160) includes an outer end parallel to the surface of the negative active material layer (132), and an inner end closer to the negative substrate (131) than the outer end,

the central axis is a virtual line connecting a center of the outer end and a center of the inner end, and

the center of the inner end is misaligned from the center of the outer end along a direction in which the electrolyte flows when the electrolyte is injected.

3. The rechargeable battery (500) of claim 2, wherein:

the negative active material layer (132) has a substantially constant thickness,

the normal line of the surface of the negative active material layer (132) coincides with a thickness direction of the negative electrode (130), and

in one or more of the plurality of groove portions (160), the center of the inner end is lower than the center of the outer end along a gravity direction.

4. The rechargeable battery (500) of any one of the preceding claims, wherein:
the plurality of groove portions (160) have a substantially constant depth.

5. The rechargeable battery (500) of any one of the claims 1 to 3, wherein:
the plurality of groove portions (160) have different depths depending on a position thereof.

6. The rechargeable battery (500) of claim 5, wherein:
the plurality of groove portions (160) have different depths depending on the position thereof along a width direction of the negative electrode (130).

7. The rechargeable battery (500) of claim 6, wherein:

the negative electrode (130) includes two edges facing each other along the width direction, and

the plurality of groove portions (160) have a greater depth the farther they are from the two edges.

8. The rechargeable battery (500) of any one of the claims 4 to 7, wherein:
the plurality of groove portions (160) are provided in a dot pattern and satisfy at least one of conditions (1), (2), and (3):

$$(1) \ 30 \ \mu m \leq \text{a diameter of a groove portion (160)} \leq 70 \ \mu m;$$

$0.3 \leq$ a depth of a groove portion (160) / a thickness of a negative active material layer (132) $\leq 0.8$;

and

$$(3) \ 30° \leq \text{a slope of a center axis for a normal line} \leq 70°.$$

9. The rechargeable battery (500) of any one of the preceding claims, wherein:

the plurality of groove portions (160) are a plurality of first groove portions,

the positive electrode (120) includes a positive substrate (121), and a positive active material layer (122) on at least one surface of the positive substrate (121), and

a plurality of second groove portions having the same configuration as the plurality of first groove portions are in the positive active material layer (122).

10. A rechargeable battery (500) comprising:

an electrode assembly (100) including a positive electrode (120), a negative electrode (130), and a separator (140);
a can (210, 310) including the electrode assembly (100) and an electrolyte in an internal space thereof; and
a cap plate (220, 320) coupled to the can (210, 310) and configured to seal the can (210, 310) and having an electrolyte injection opening;
wherein the negative electrode (130) includes a negative substrate (131), and a negative active material layer (132) on at least one surface of the negative substrate (131),
a plurality of groove portions (160) that store the electrolyte are in the negative active material layer (132),
one or more of the plurality of groove portions (160) includes an outer end parallel to the surface of the negative active material layer (132), and an inner end closer to the negative substrate (131) than the outer end; and
a center of the inner end is misaligned from a center of the outer end along a direction in which the electrolyte flows when the electrolyte is injected.

11. The rechargeable battery (500) of claim 10, wherein:

the plurality of groove portions (160) are a plurality of first groove portions,
the positive electrode (120) includes a positive substrate (121), and a positive active material layer (122) on at least one surface of the positive substrate (121), and
a plurality of second groove portions that store the electrolyte are in the positive active material layer (122).

12. The rechargeable battery (500) of claim 11, wherein:

one or more of the plurality of second groove portions includes an outer end parallel to the surface of the positive active material layer (122) and an inner end positioned closer to the positive substrate (121) than the outer end, and
a center of the inner end is misaligned from a center of the outer end along a direction in which the electrolyte flows when the electrolyte is injected.

13. The rechargeable battery (500) of claim 12, wherein:
the plurality of second groove portions have a substantially constant depth.

14. The rechargeable battery (500) of claim 12, wherein:
the plurality of second groove portions have different depths depending on a position thereof along a width direction of the positive electrode (120).

15. The rechargeable battery (500) of claim 14, wherein:

the positive electrode (120) includes two edges facing each other along the width direction, and
the plurality of second groove portions have a greater depth the farther they are from the two edges.

# FIG. 1

# FIG. 2

FIG. 3

FIG. 4

# FIG. 5

## FIG. 6

# FIG. 7

# FIG. 8

# FIG. 9

# FIG. 10

## FIG. 11

# FIG. 12

# FIG. 13

501

# FIG. 14

FIG. 15

Europäisches Patentamt

European Patent Office

Office européen des brevets

# EUROPEAN SEARCH REPORT

**Application Number**

EP 25 21 2376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2024 106090 U1 (EVE ENERGY CO LTD [CN]) 5 November 2024 (2024-11-05) * paragraph [0025]; figures 1-6 * ----- | 1-9 | INV. H01M4/13 H01M10/04 H01M50/107 |
| X | JP 2010 182620 A (PANASONIC CORP) 19 August 2010 (2010-08-19) * paragraphs [0025], [0026], [0064] - [0066], [0140] - [0142]; figures 1, 10, 13 * ----- | 10-15 | H01M50/531 |
| A | EP 4 386 969 A1 (LG ENERGY SOLUTION LTD [KR]) 19 June 2024 (2024-06-19) * the whole document * ----- | 1-15 | |

TECHNICAL FIELDS
SEARCHED     (IPC)

H01M

The present search report has been drawn up for all claims

| Place of search | Date of completion of the search | Examiner |
|---|---|---|
| Munich | 20 March 2026 | Nogueira da Silva, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 2376

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | Publication date | Patent family member(s) | | Publication date |
|---|---|---|---|---|
| DE 202024106090 U1 | 05-11-2024 | CN | 221327752 U | 12-07-2024 |
| | | DE | 202024106090 U1 | 05-11-2024 |
| | | EP | 4557393 A2 | 21-05-2025 |
| | | JP | 2025074019 A | 13-05-2025 |
| | | US | 2025141060 A1 | 01-05-2025 |
| | | WO | 2024175131 A1 | 29-08-2024 |
| JP 2010182620 A | 19-08-2010 | NONE | | |
| EP 4386969 A1 | 19-06-2024 | CA | 3233788 A1 | 20-04-2023 |
| | | CN | 115986329 A | 18-04-2023 |
| | | CN | 218867340 U | 14-04-2023 |
| | | EP | 4386969 A1 | 19-06-2024 |
| | | JP | 7744502 B2 | 25-09-2025 |
| | | JP | 2024528137 A | 26-07-2024 |
| | | KR | 20230054604 A | 25-04-2023 |
| | | US | 2023118382 A1 | 20-04-2023 |
| | | WO | 2023063808 A1 | 20-04-2023 |